# EUROPEAN PATENT APPLICATION

(11) **EP 4 329 258 A1**
(43) Date of publication of application: **28.02.2024**
(21) Application number: 22790660.9
(22) Date of filing: 05.01.2022
(51) Int. Cl.: H04L 45/74, H04L 45/00, H04L 45/30

(54) **NOTIFICATION METHOD AND APPARATUS FOR COMPUTING POWER RESOURCES, STORAGE MEDIUM, AND ELECTRONIC APPARATUS**

(30) Priority: 20.04.2021 CN 202110424931
(71) Applicant: ZTE Corporation, Shenzhen, Guangdong 518057 (CN)
(72) Inventor: HUANG, Guangping, Shenzhen, Guangdong 518057 (CN)
(74) Representative: Novagraaf Technologies
(86) International application number: PCT/CN2022/070342
(87) International publication number: WO 2022/222550

(57) **Abstract**

The present disclosure provides a method and apparatus for notifying computing power resource notification, a storage medium, and an electronic apparatus. The method includes: dividing a computing power resource into a slow variable-granularity computing power resource and a fast variable-granularity computing power service, wherein the slow variable-granularity computing power resource is used for indicating a computing power resource of which the resource state change frequency is lower than a preset threshold value, and the fast variable-granularity computing power service is used for indicating a refined computing power resource of which the resource state change frequency is higher than the preset threshold value; and notifying, in a first mode, the slow variable-granularity computing power resource to a network edge node or a data center gateway, and notifying, in a second mode, the fast variable-granularity computing power service to a network edge node in a domain where the network edge node or the data center gateway is located. By using the above method, it is possible to solve the problem in the related art that the computing power resources of different types and different state change frequencies are all incorporated into routing table entries maintained by a network node, resulting in an exponential growth in the routing table entries, and thus causing a damage to the routing convergence efficiency.

## Description

### Cross-Reference to Related Application

The present disclosure claims the priority of Chinese Patent Application 202110424931.4, filed in the China Patent Office on April 20, 2021, and entitled "Method and Apparatus for notifying Computing Power Resource , Storage Medium, and Electronic Apparatus", the disclosure of which is hereby incorporated by reference in its entirety.

### Technical Field

The present disclosure mainly relates to the field of communications, and in particular to a method and apparatus for notifying computing power resource, a storage medium, and an electronic apparatus.

### Background

With the rapid development of high-bandwidth and low-delay services such as videos, games and Internet of Vehicles, the proportion of the high-bandwidth and low-delay services in service traffic is higher and higher, and computing power resources and storage resources begin to evolve from traditional centralized deployment to distributed deployment. The computing power resources of terminals, edge nodes and cloud nodes are connected together by using a network, and collaborate with the network to schedule the service traffic, that is, the service traffic is routed to the current optimal computing power node for processing, which has attracted more and more attention in the industry. The service traffic is routed to corresponding computing power nodes for processing according to various different service requirements, which is a mainstream service scenario and a service requirement of a computing power network, but the current network architecture does not support the network to sense the computing power resources and storage resources in a cloud to realize arrangement scheduling, nor does it support to maintain a corresponding computing power routing table entry on a network node, in order to the computing power resource may only be incorporated into the routing table entries maintained by the network node.

In view of the problem in the related art that the computing power resources of different types and different state change frequencies are all incorporated into routing table entries maintained by a network node, resulting in an exponential growth in the routing table entries, and thus causing a damage to the routing convergence efficiency, no effective technical solution has been proposed yet.

### Summary

Embodiments of the present disclosure provide a method and apparatus for notifying computing power resource, a storage medium, and an electronic apparatus, to at least solve the problem in the related art that computing power resources of different types and different state change frequencies are all incorporated into routing table entries maintained by a network node, resulting in an exponential growth in the routing table entries, and thus causing a damage to the routing convergence efficiency.

The embodiments of the present disclosure provide a method for notifying a computing power resource, including: dividing a computing power resource into a slow variable-granularity computing power resource and a fast variable-granularity computing power service, wherein the slow variable-granularity computing power resource is used for indicating a computing power resource of which the resource state change frequency is lower than a preset threshold value, and the fast variable-granularity computing power service is used for indicating a refined computing power resource of which the resource state change frequency is higher than the preset threshold value; and notifying, in a first mode, the slow variable-granularity computing power resource to a network edge node or a data center gateway, and notifying, in a second mode, the fast variable-granularity computing power service to a network edge node in a domain where the network edge node or the data center gateway is located.

The embodiments of the present disclosure provide an apparatus for notifying a computing power resource, including: a division module, configured to divide a computing power resource into a slow variable-granularity computing power resource and a fast variable-granularity computing power service, wherein the slow variable-granularity computing power resource is used for indicating a computing power resource of which the resource state change frequency is lower than a preset threshold value, and the fast variable-granularity computing power service is used for indicating a refined computing power resource of which the resource state change frequency is higher than the preset threshold value; and a notification module, configured to notify, in a first mode, the slow variable-granularity computing power resource to a network edge node or a data center gateway, and notify, in a second mode, the fast variable-granularity computing power service to a network edge node in a domain where the network edge node or the data center gateway is located.

According to yet another embodiment of the present disclosure, further provided is a computer-readable storage medium, wherein a computer program is stored in the storage medium, and the computer program is configured to execute the steps in any one of the foregoing method embodiments when running.

According to yet another embodiment of the present disclosure, further provided is an electronic apparatus, including a memory and a processor, wherein a computer program is stored in the memory, and the processor is configured to run the computer program, so as to execute the steps in any one of the foregoing method embodiments.

By using the above embodiments, the computing power resource is divided into the slow variable-granularity computing power resource and the fast variable-granularity computing power service, wherein the slow variable-granularity computing power resource is used for indicating the computing power resource of which the resource state change frequency is lower than the preset threshold value, and the fast variable-granularity computing power service is used for indicating the refined computing power resource of which the resource state change frequency is higher than the preset threshold value; and the slow variable-granularity computing power resource is notified to the network edge node or the data center gateway in the first mode, and the fast variable-granularity computing power service is notified to the network edge node in the domain where the network edge node or the data center gateway is located in the second mode, that is, the computing power resource is divided into the slow variable-granularity computing power resource and the fast variable-granularity computing power service according to the resource state change frequency, and the slow variable-granularity computing power resource and the fast variable-granularity computing power service are notified in preset modes. By using the above method, it is possible to solve the problem in the related art that the computing power resources of different types and different state change frequencies are all incorporated into routing table entries maintained by a network node, resulting in an exponential growth in the routing table entries, and thus causing a damage to the routing convergence efficiency. Therefore, notification is performed according to different computing power resources, and then the computing power resources are incorporated into routing table entries maintained by different network nodes.

### Brief Description of the Drawings

The drawings described herein are used to provide a further understanding of the present disclosure, and constitute a part of the present application, and illustrative embodiments of the present disclosure and descriptions thereof are used to explain the present disclosure, but do not constitute improper limitations to the present disclosure. In the drawings:
Fig. 1 is a block diagram of a hardware structure of a computer terminal of a method for notifying computing power resource notification according to an embodiment of the present disclosure;
Fig. 2 is a flowchart of a method for notifying computing power resource notification according to an embodiment of the present disclosure;
Fig. 3 is a schematic diagram of a computing power granularity type routing and notification mechanism according to an embodiment of the present disclosure;
Fig. 4 is a schematic diagram of a two-level routing and encapsulation mechanism of an IP address and a computing power service identifier according to an embodiment of the present disclosure;
Fig. 5 is a first flowchart of two-level encapsulation and forwarding of an IP address and a computing power service identifier according to an embodiment of the present disclosure;
Fig. 6 is a second flowchart of two-level encapsulation and forwarding of an IP address and a computing power service identifier according to an embodiment of the present disclosure; and
Fig. 7 is a structural block diagram of a method for notifying computing power resource according to an embodiment of the present disclosure.

### Detailed Description of the Embodiments

The present disclosure will be described in detail below with reference to the drawings and in combination with embodiments. It should be noted that, in the case of no conflict, the embodiments in the present application and features in the embodiments may be combined with each other.

It should be noted that, the terms "first" and "second" and the like in the specification, claims and the above drawings of the present disclosure are used for distinguishing similar objects, and are not necessarily used for describing a specific sequence or precedence order. It should be understood that the data used in this way may be interchanged in appropriate circumstances, so as to describe the embodiments of the present application herein. In addition, the terms "including", "having" and any variations thereof are intended to cover non-exclusive inclusions, for example, processes, methods, systems, products or devices including a series of steps or units are not necessarily limited to those clearly listed steps or units, but may include other steps or units that are not clearly listed or are inherent to these processes, methods, products or devices.

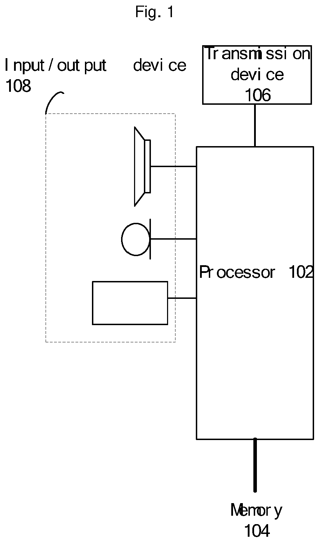

The method provided in the embodiments of the present application may be executed in a mobile terminal, a computer terminal or a similar computing apparatus. Taking running on the computer terminal as an example, Fig. 1 is a block diagram of a hardware structure of a computer terminal of a method for notifying computing power resource notification according to an embodiment of the present disclosure. As shown in Fig. 1, the computer terminal may include one or more (only one is shown in Fig. 1) processors 102 (the processor 102 may include, but is not limited to, processing apparatuses such as a microprogrammed control unit (MCU) or a field-programmable gate array (FPGA)), and a memory 104 for storing data. Optionally, the computer terminal may further include a transmission device 106 for a communication function, and an input/output device 108. Those ordinary skilled in the art may understand that the structure shown in Fig. 1 is only schematic and does not limit the structure of the computer terminal. For example, the computer terminal may further include more or fewer components than those shown in Fig. 1, or have the same function as shown in Fig. 1, or have more different configurations than the functions shown in Fig. 1. The memory 104 may be used for storing computer programs, for example, software programs and modules of application software, such as a computer program corresponding to the computing power resource notification method in the embodiments of the present disclosure. By using running the computer programs stored in the memory 104, the processor 102 executes various functional applications and data processing, that is, implements the above method. The memory 104 may include a high-speed random access memory, and may also include a non-volatile memory, such as one or more magnetic storage apparatuses, a flash memory, or other non-volatile solid-state memories. In some instances, the memory 104 may further include memories that are arranged remotely relative to the processor 102, and these memories may be connected to the computer terminal by using a network. Instances of the network include, but are not limited to, the Internet, an intranet, a local area network, a mobile communication network, and combinations thereof. The transmission device 106 is used for receiving or sending data by using a network. A specific instance of the network may include a wireless network provided by a communication provider of the computer terminal. In one instance, the transmission device 106 includes a network interface controller (Network Interface Controller, NIC for short), which may be connected with other network devices by using a base station, so as to communicate with the Internet. In one instance, the transmission device 106 may be a radio frequency (Radio Frequency, RF for short) module, which is used for communicating with the Internet in a wireless mode.

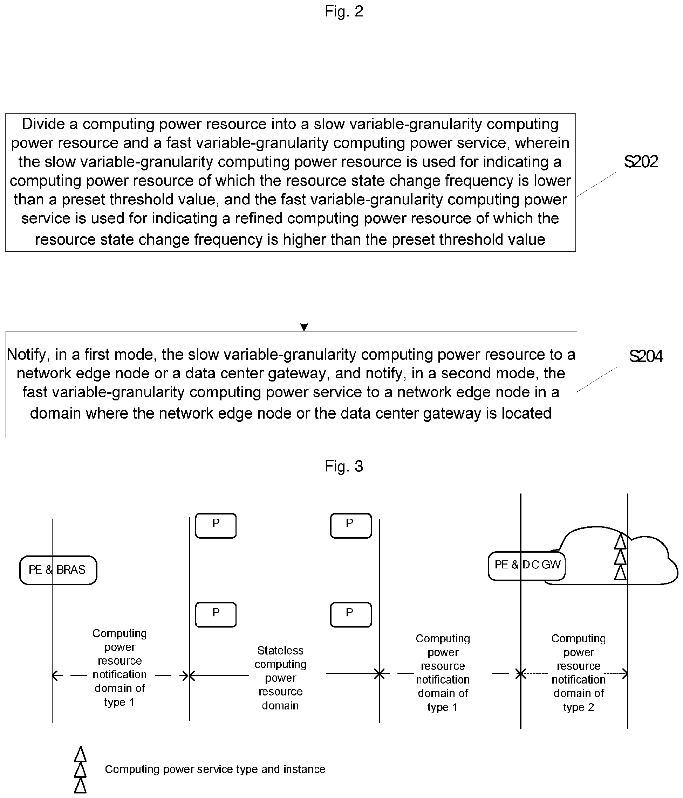

According to one embodiment of the present disclosure, provided is a method for notifying computing power resource notification, which is applied to a computer terminal, Fig. 2 is a flowchart of a method for notifying computing power resource notification according to an embodiment of the present disclosure, and as shown in Fig. 2, the method includes:
step S202, dividing a computing power resource into a slow variable-granularity computing power resource and a fast variable-granularity computing power service, wherein the slow variable-granularity computing power resource is used for indicating a computing power resource of which the resource state change frequency is lower than a preset threshold value, and the fast variable-granularity computing power service is used for indicating a refined computing power resource of which the resource state change frequency is higher than the preset threshold value; and
step S204, notifying, in a first mode, the slow variable-granularity computing power resource to a network edge node or a data center gateway, and notifying, in a second mode, the fast variable-granularity computing power service to a network edge node in a domain where the network edge node or the data center gateway is located.

By using the above steps, the computing power resource is divided into the slow variable-granularity computing power resource and the fast variable-granularity computing power service, wherein the slow variable-granularity computing power resource is used for indicating the computing power resource of which the resource state change frequency is lower than the preset threshold value, and the fast variable-granularity computing power service is used for indicating the refined computing power resource of which the resource state change frequency is higher than the preset threshold value; and the slow variable-granularity computing power resource is notified to the network edge node or the data center gateway in the first mode, and the fast variable-granularity computing power service is notified to the network edge node in the domain where the network edge node or the data center gateway is located in the second mode, that is, the computing power resource is divided into the slow variable-granularity computing power resource and the fast variable-granularity computing power service according to the resource state change frequency, and the slow variable-granularity computing power resource and the fast variable-granularity computing power service are notified in preset modes. By using the above method, it is possible to solve the problem in the related art that the computing power resources of different types and different state change frequencies are all incorporated into routing table entries maintained by a network node, resulting in an exponential growth in the routing table entries, and thus causing a damage to the routing convergence efficiency. Therefore, notification is performed according to different computing power resources, and then the computing power resources are incorporated into routing table entries maintained by different network nodes.

It should be noted that, a computing power resource of which the change frequency is lower than the preset threshold value is the slow variable-granularity computing power resource, which may also be understood as relatively macroscopic data, and a computing power resource of which the change frequency is higher than the preset threshold value is the fast variable-granularity computing power service, which may also be understood as relatively microscopic data.

In one exemplary embodiment, the step: notifying, in the first mode, the slow variable-granularity computing power resource to the network edge node or the data center gateway, at least includes one of the following: notifying the slow variable-granularity computing power resource to the network edge node or the data center gateway by using a border gateway protocol (BGP); and notifying control plane interface information of the slow variable-granularity computing power resource to the network edge node or the data center gateway.

In other words, the slow variable-granularity computing power resource has the following two notification modes 1) a border gateway protocol (Border Gateway Protocol, BGP for short) extension mode, that is, the information of the slow variable-granularity computing power resource is notified to the network edge node or the data center gateway by using an extended BGP load; and 2) a centralized controller mode: the control plane interface information of the slow variable-granularity computing power resource is notified to the network edge node or the data center gateway, wherein the notification mode includes, but is not limited to, using a path computation element protocol (Path Computation Element Protocol, PCEP for short), a border gateway protocol link state (Border Gateway Protocol Link State, BGP-LS for short), and the like, which is not limited in the embodiments of the present disclosure.

In one exemplary embodiment, the step: notifying, in the second mode, the fast variable-granularity computing power service to the network edge node in the domain where the network edge node or the data center gateway is located, at least includes at least one of the following: notifying, in a publishing-subscribing subscription mode, the fast variable-granularity computing power service to the network edge node in the domain where the network edge node or the data center gateway is located; and notifying, by using an interior gateway protocol (Interior Gateway Protocol, IGP for short), the fast variable-granularity computing power service to the network edge node in the domain where the network edge node or the data center gateway is located.

It can be understood that, the fast variable-granularity computing power service has the following two notification modes: 1) notifying, in the publishing-subscribing subscription mode, the fast variable-granularity computing power service to the network edge node in the domain where the network edge node or the data center gateway is located; and 2) notifying the fast variable-granularity computing power service by using interior gateway protocol (Interior Gateway Protocol, IGP for short) extension, that is, notifying, by using an extended IGP load, the fast variable-granularity computing power service to the network edge node in the domain where the network edge node or the data center gateway is located.

In one exemplary embodiment, after the step: notifying, in the first mode, the slow variable-granularity computing power resource to the network edge node or the data center gateway, and notifying, in the second mode, the fast variable-granularity computing power service to the network edge node in the domain where the network edge node or the data center gateway is located, the method further includes: creating a first routing table entry according to the slow variable-granularity computing power resource, in order to the network edge node or the data center gateway maintains the first routing table entry; and creating a second routing table entry according to the fast variable-granularity computing power service, in order to the network edge node in the domain where the network edge node or the data center gateway is located maintains the second routing table entry.

It can be understood that, different routing table entries are created according to the granularity of the computing power resources, and the corresponding routing table entries are maintained by different nodes, specifically, the first routing table entry is created according to the slow variable-granularity computing power resource, the first routing table entry is maintained by the network edge node or the data center gateway which receives the slow variable-granularity computing power resource, the second routing table entry is created according to the fast variable-granularity computing power service, and the second routing table entry is maintained by the network edge node which receives the fast variable-granularity computing power service and which is in the domain where the network edge node or the data center gateway is located. It should be noted that, the granularity of the slow variable-granularity computing power resource in the first routing table entry is coarser and the change frequency is lower, in order to the size of the first routing table entry maintained by the network edge node or the data center gateway is in direct proportion to the number of network edge nodes or data center gateways which are connected and linked with the first routing table entry, and accordingly, the scale of the first routing table entry is greatly compressed. The size of the second routing table entry is in direct proportion to the scale of a computing power service provided by the network edge node in the domain where the network edge node or the data center gateway is located, and only the fast variable-granularity computing power service of the network edge node in the domain where the local or limited belonging network edge node or data center gateway is located is maintained, in order to the scale of the second routing table entry is greatly compressed.

In one exemplary embodiment, after the step: creating the first routing table entry according to the slow variable-granularity computing power resource, in order to the network edge node or the data center gateway maintains the first routing table entry, the method further includes: when an ingress node receives computing power traffic, determining, according to the first routing table entry, a target node satisfying a computing power traffic resource of the computing power traffic, wherein the target node includes a target network edge node or a target data center node; encapsulating an IP address of the target node in a message header; and acquiring a computing power service identifier corresponding to the computing power traffic, and encapsulating the computing power service identifier in the target node, wherein the computing power service identifier has a one-to-one mapping relationship with a computing power service instance.

In other words, two-level IP address encapsulation and the computing power service identifier is executed at the ingress node (e.g., a broadband remote access system (Broadband Remote Access System, BRAS for short)), when the ingress node receives the computing power traffic, the ingress node determines the target network edge node or the target data center node according to the first routing table entry maintained by the network edge node or the data center gateway, uses the target network edge node or the target data center node as the target node, and encapsulates the IP address of the target node in the message header, wherein the target node satisfies the computing power traffic resource of the computing power traffic, determines the corresponding computing power service identifier according to the computing power traffic, and encapsulates the computing power service identifier.

Further, in order to keep the computing power traffic to be routed to the corresponding computing power service instance, an egress node maintains the mapping relationship between the computing power service identifier and the computing power service instance, and the method for maintaining the mapping relationship includes, but is not limited to, a quintuple solution.

Specifically, the step of encapsulating the IP address of the target node in the message header at least includes one of the following: encapsulating a destination address of the target node in the message header; and using the target node as an egress node of the computing power traffic, so as to determine a source address of the target node, and encapsulating the source address in the message header.

The IP address of the target node may be encapsulated in the message header in the following modes: 1) encapsulating the target network edge node or the target data center node in a corresponding field of the message header as the destination address of the target node, wherein the application scenario includes, but is not limited to, network data planes, such as IPv4, IPv6, multi-protocol label switching (Multi-protocol Label Switching, MPLS for short), and the like; 2) using the target network edge node or the target data center node as the egress node, so as to arrange a source path, and encapsulating the source path in the corresponding message header, wherein the application scene includes, but is not limited to, network data planes such as SR-MPLS, SRv6, and the like.

The computing power service identifier may be encapsulated in the following modes: 1) an SRv6 computing power service identifier programming extension solution, that is, in a locator (Locator) + function (Function) structure of segment identification (Segment Identification, SID for short), the computing power service identifier is encapsulated in the SID as a Function; and 2) the computing power service identifier is encapsulated in an OverLay layer above the IP address.

In one exemplary embodiment, the method further includes: when an intermediate node receives the computing power traffic carrying the encapsulated IP address and the encapsulated computing power service identifier, instructing the intermediate node to not decapsulate the encapsulated computing power service identifier, and instructing the intermediate node to forward the computing power traffic carrying the encapsulated IP address and the encapsulated computing power service identifier.

It can be understood that, the intermediate node does not need to identify the computing power service identifier, that is, the intermediate node does not need to decapsulate the computing power service identifier, and only performs ordinary forwarding according to the computing power traffic carrying the encapsulated IP address and the encapsulated computing power service identifier.

In one exemplary embodiment, the method further includes: when the egress node receives the computing power traffic carrying the encapsulated IP address and the encapsulated computing power service identifier, instructing the egress node to decapsulate the encapsulated computing power service identifier, so as to obtain the computing power service identifier; instructing the egress node to search for, from the second routing table entry, a target computing power service instance corresponding to the computing power service identifier; and forwarding the computing power traffic to the target computing power service instance.

In other words, after the computing power traffic arrives at the egress node, the egress node decapsulates the encapsulated computing power service identifier, the egress node searches for the second routing table entry, determines the target computing power service instance according to the computing power service identifier, and forwards the computing power traffic to the target computing power service instance, and particularly, when the computing power service identifier corresponds to a plurality of target computing power service instances, the egress node executes a local policy, and selects a specific target computing power service instance.

The flow of the method for notifying computing power resource is explained and illustrated below in combination with several optional embodiments, but the technical solutions of the embodiments of the present disclosure are not limited thereto.

A computing power network is located on a content forwarding network (Content Forwarding Network, CFN for short) thin layer above a network layer, the current computing power condition and the network condition are published to the network as routing information, the network routes a computing task message to a corresponding computing node, the computing power network needs to perform routing decision making on service traffic according to a computing power distribution resource, that is, routes the service to the current optimal computing power node for processing, thereby exerting the pooling advantage of distributed computing power resources, improving the utilization rate of the computing power resources, and meanwhile meeting the computing power and network requirements of the service more accurately at higher quality.

For the current network, especially a second layer (physical link layer) network and a third layer (network layer) network, the granularity of forwarding processing is a message or a type stream, and a corresponding bandwidth, a queue and a cache resource are configured for the message or the type stream. An object processed by the computing power node in the computing power network is no longer the message or the type stream, but is an application, such that the current processing mechanism of the network for the message and the type stream is not suitable for the computing power network. In the computing power network, the network needs to directly match a specific application or service with an optimal matching computing power node, and performs corresponding service traffic routing, which requires the network to perform collaborative optimization routing on an application stream according to network resources and computing power resources, and the routing decision making process requires the direct participation of application information. Therefore, under the computing power network architecture, the computing power resources or the service routing and the current IP topology routing need to be executed on the network layer, which provides a brand new challenge for a forwarding plane and a control plane of a routing forwarding network element. In the related art, computing power resources of different types and different state change frequencies are uniformly incorporated into a resource state table maintained by a network node, resulting in an exponential growth in the routing table entries, and thus causing serious current network problems such as routing oscillation, a damage to the routing convergence efficiency, etc.

In view of the above problems, the present disclosure provides a method for notifying computing power resource notification, including: first, dividing a computing power resource into two large granularities according to whether the change frequency is lower than a preset threshold value: 1) denoting, as granularity 1, a slow variable-granularity computing power resource of a network edge node or a data center gateway; and 2) denoting, as granularity 2, a fast variable-granularity computing power service of a network edge node in a domain where the network edge node or the data center gateway is located, wherein the slow variable-granularity computing power resource is used for indicating a computing power resource of which the computing power resource state change frequency is lower than a preset threshold value, and the fast variable-granularity computing power service is used for indicating a refined computing power resource of which the computing power resource state change frequency is higher than the preset threshold value.

Specifically, the slow variable-granularity computing power resource includes at least one of the following: a computing resource and a storage resource, such as a central processing unit (Central Processing Unit, CPU for short), a graphics processing unit (Graphics Processing Unit, GPU for short), an embedded neural-network processing unit (Neural-Network Processing Unit, NPU for short), an application specific integrated circuit (Application Specific Integrated Circuit, ASIC for short), and the like; an available state of the slow variable-granularity computing power resource, for example, a quantized idle resource value, such as a usage rate, the number of available cores, and the like; and a computing power service type provided by the slow variable-granularity computing power resource, including a software service (Software Service, SaaS for short)/functional service (functional service, FaaS for short) service identifier, and a busy/idle state of a specific service, wherein the threshold value of the busy/idle state may be configured, for example, occupying 90% or more is busy.

The fast variable-granularity computing power service includes at least one of the following: a computing power service type and a corresponding serviceable instance; the processing capacity of each serviceable instance; and a mapping relationship between the computing power service and the serviceable instance, for example, an anycast address Anycast identifies a computing power service, and an associated group member address is an instance address.

The slow variable-granularity computing power resource corresponds to an edge computing node or a data center node, the slow variable-granularity computing power resource is notified to the network edge node or the data center gateway in a first mode, the network edge node or the data center gateway creates a first routing table entry according to the slow variable-granularity computing power resource and maintains the first routing table entry, the granularity of the computing power resource in the first routing table entry is coarser and the change frequency is lower, in order to the size of the first routing table entry maintained by the network edge node or the data center gateway is in direct proportion to the number of network edge nodes or data center gateways which are connected and linked with the first routing table entry, and accordingly, the scale of the routing table entry is greatly compressed. The network edge node or the data center gateway getting online for the first time notifies universal-set data of the slow variable-granularity computing power resource, and then triggers variable update and synchronizes the universal-set data of the slow variable-granularity computing power resource according to a configurable change threshold value. The slow variable-granularity computing power resource has the following two notification modes:
1) a border gateway protocol (Border Gateway Protocol, BGP for short) extension solution, that is, the universal-set data of the slow variable-granularity computing power resource is notified to the edge computing node or the data center gateway by using an extended BGP load; and
2) a centralized controller solution: the universal-set data of the slow variable-granularity computing power resource is notified and synchronized to the edge computing node or the data center gateway by using a path computation element protocol (Path Computation Element Protocol, PCEP for short), a BGP-LS, etc.

The fast variable-granularity computing power service corresponds to the network edge node in the domain where the network edge node or data center gateway is located, and does not need to be notified to the edge computing node or the data center gateway, the network edge node in the domain where the network edge node or data center gateway is located creates a second routing table entry according to the fast variable-granularity computing power service and maintains the second routing table entry, the size of the second routing table entry is in direct proportion to the scale of a computing power service provided by the network edge node in the domain where the network edge node or the data center gateway is located, and since the network edge node in the domain where the network edge node or the data center gateway is located only maintains the computing power service information state of the network edge node in the domain where the local or limited belonging network edge node or data center gateway is located, the scale of the second routing table entry is greatly compressed. The network edge node, which gets online for the first time and is in the domain where the network edge node or the data center gateway is located, notifies or publishes the universal-set data of the fast variable-granularity computing power service, and then triggers variable update according to a configurable change threshold value, so as to notify and synchronize the universal-set data of the fast variable-granularity computing power service. The fast variable-granularity computing power service has the following two notification modes:
1) notifying, in a publishing-subscribing subscription mode, the fast variable-granularity computing power service to the network edge node in the domain where the network edge node or the data center gateway is located; and
2) performing notification by using an interior gateway protocol (Interior Gateway Protocol, IGP for short), that is, notifying, by using an extended IGP load, the fast variable-granularity computing power service to the network edge node in the domain where the network edge node or the data center gateway is located.

As shown in Fig. 3, Fig. 3 is a schematic diagram of a computing power granularity type routing and notification mechanism according to an embodiment of the present disclosure.

A two-level encapsulation mechanism of an IP address and a computing power service identifier is introduced into a network data plane. Specifically, two-level IP address encapsulation and the computing power service identifier is executed at a user access gateway (which is equivalent to the ingress node in the above embodiment) (such as a broadband remote access system (BRAS)), the user access gateway performs computation according to the first routing table entry, so as to generate a routing of the network edge node or the data center gateway to which a target network edge node or a target data center gateway belongs, and executes IP address encapsulation, wherein the IP address encapsulation at least includes one of the following:
1) a destination address encapsulation solution, that is, the network edge node or the data center gateway to which the target network edge node or the target data center gateway belongs is encapsulated in a corresponding field of a message header as a destination address, wherein the application scenario includes, but is not limited to, network data planes such as IPv4, IPv6, MPLS, and the like; and
2) a source routing address solution, that is, the network edge node or the data center gateway to which the target network edge node or the target data center gateway belongs is used an egress node to arrange a source routing path and is encapsulated in a corresponding field of the message header, wherein the application scenario includes, but is not limited to, network data planes such as SR-MPLS, SRv6, and the like.

Meanwhile, the user access gateway (which is equivalent to the ingress node in the above embodiment) (such as a broadband remote access system (BRAS)) executes computing power service identifier encapsulation according to a computing power service request of a user, which includes the following two encapsulation solutions:
The computing power service identifier includes the following two encapsulation modes:
1) an SRv6 computing power service identifier programming extension solution, that is, in a locator (Locator) + function (Function) structure of SID (Segment IDentification), the computing power service identifier is encapsulated in the SID as a Function; and
2) the computing power service identifier is encapsulated in an OverLay layer above the IP address.

In particular, a network intermediate forwarding node does not need to decapsulate the computing power service identifier, and only forwards the computing power traffic carrying the encapsulated IP address and the encapsulated computing power service identifier.

When the egress node receives the computing power traffic carrying the encapsulated IP address and the encapsulated computing power service identifier, the egress node is instructed to decapsulate the encapsulated computing power service identifier, and the egress node searches for, from the second routing table entry, a target computing power service instance corresponding to the computing power service identifier; and the computing power traffic is forwarded to the target computing power service instance.

In particular, in order to maintain the flow viscosity, that is, to ensure that the computing power traffic of the same application is routed to the corresponding computing power service instance, the egress node maintains the mapping relationship between the computing power service identifier and the computing power service instance, and routes the computing power traffic to the corresponding computing power service instance, and the mode of the egress node for maintaining the mapping relationship between the computing power service identifier and the computing power service instance includes, but is not limited to a quintuple solution (a source IP address, a destination IP address, a source port, a destination port and a transport layer protocol type).

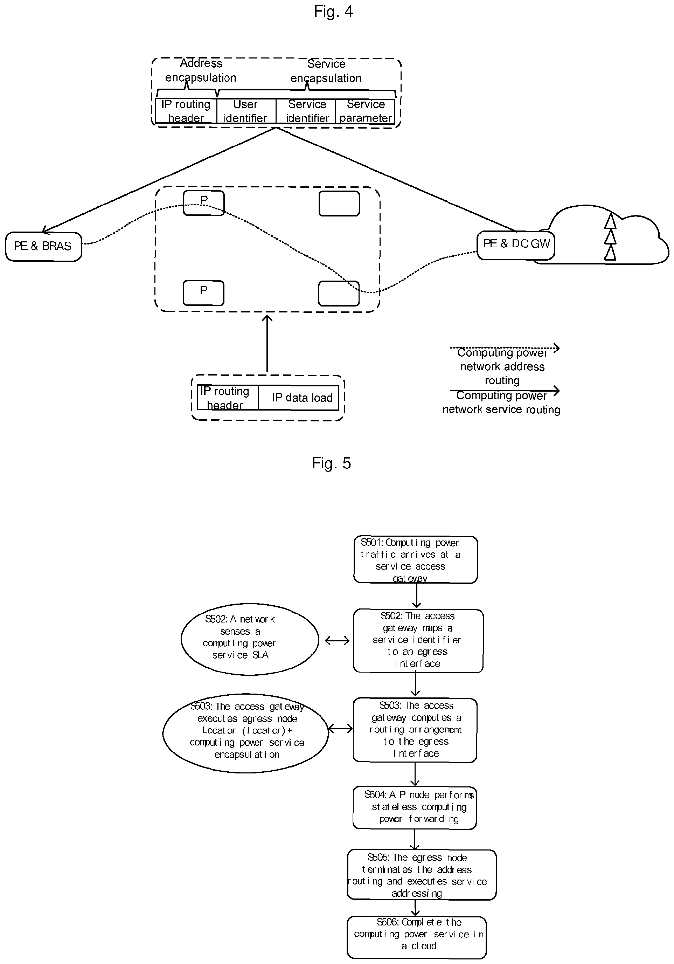

As shown in Fig. 4, Fig. 4 is a schematic diagram of a two-level routing and encapsulation mechanism of an IP address and a computing power service identifier according to an embodiment of the present disclosure.

In one exemplary embodiment, a two-level encapsulation and forwarding process of an IP address and a computing power service identifier based on SRv6 computing power service function programming is as shown in Fig. 5.

An SRv6 ingress node performs computation according to the first routing table entry, so as to obtain a target network edge node or a target data center node satisfying a computing power traffic resource of the computing power traffic, uses, as an egress node, a gateway or a network edge node to which the target network edge node or the target data center node belongs, uses the address of the egress node as a Locator of an SRv6 last hop, uses a computing power service identifier corresponding to a user request as a Function of the SRv6 last hop, and encapsulates the same in an SRH header.

In particular, the SRv6 ingress node and the egress node are required to have a semantic parsing function for the computing power service identifier. The computing power application data stream forwarding process is as follows:
Step S501: the computing power traffic arrives at a service access gateway (which is equivalent to the ingress node in the above embodiment);
Step S502: the service access gateway searches for the first routing table entry according to an application computing power request of the user, so as to complete IP address encapsulation;
Step S503: according to the computing power service identifier of the user, computing power service identifier encapsulation is completed in the egress node SID;
it should be noted that, the IP address encapsulation and the computing power service identifier encapsulation are respectively embodied in the Locator and the Function of the SID (which may include service and function parameters); and in particular, the service access gateway maintains the mapping relationship between the computing power traffic and the egress node in a mode including, but not limited to, a computing power traffic quintuple, so as to maintain the flow viscosity;
Step S504: the computing power traffic passes through a P node, the P node may be understood as an intermediate node, the P node does not perform semantic parsing of computing power service identifier, and only performs stateless computing power forwarding;
Step S505: the computing power traffic arrives at a specified egress node, the egress node completes SRv6 routing termination, and performs semantic parsing of computing power service identifier, and executes computing power service addressing; and
Step S506: the egress node searches for the second routing table entry, computes a routing to a specified computing power service identifier according to the computing power service identifier and the parameters thereof, the computing power traffic arrives at an instance of the computing power service, and executes a service function.

In particular, when the computing power service identifier corresponds to a plurality of computing power service instances, the egress node executes a local policy, selects a target computing power service instance to forward the traffic, and maintains the mapping relationship between the computing power service identifier and the computing power service instance in a mode including, but not limited to, the computing power traffic quintuple, so as to maintain the flow viscosity.

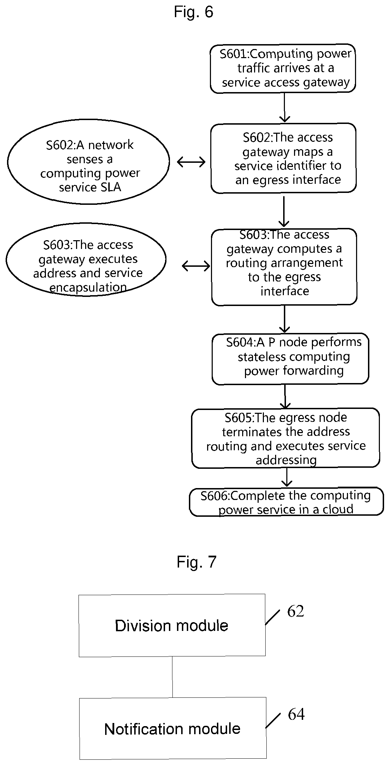

In another embodiment, a two-level encapsulation and forwarding process based on IP&MPLS OverLay computing power service function programming is shown in Fig. 6.

The ingress node performs computation according to the first routing table entry, so as to obtain a target network edge node or a target data center node satisfying a computing power traffic resource of the computing power traffic, uses, as an egress node, a gateway or a network edge node to which the target network edge node or the target data center node belongs, uses the address of the egress node as a Locator of a corresponding UnderLay(IP&MPLS or the like) last hop, encapsulates a computing power service identifier corresponding to a user request in an OverLay (a virtual network constructed on a physical network) protocol header, for example, universal network virtualization encapsulation (Universal Network Virtualization Encapsulation, GENEVE for short), a network service head (Network Service Head, NSH for short), a virtual extensible local area network (Virtual Extensible Local Area Network, VXLAN for short), etc.

In particular, the ingress node and the egress node of the IP&MPLS OverLay are required to have a semantic parsing function for the computing power service identifier. The computing power application data stream forwarding process is as follows:
Step S601: the computing power traffic arrives at a service access gateway (which is equivalent to the ingress node in the above embodiment);
Step S602: the service access gateway searches for the first routing table entry according to the computing power request of the user, so as to complete IP address encapsulation;
Step S603: according to the computing power service identifier of the user, computing power service identifier encapsulation is completed in the OverLay protocol header;
in particular, the service access gateway maintains the mapping relationship between the computing power traffic and the egress node in a mode including, but not limited to, the computing power traffic quintuple, so as to maintain the flow viscosity;
Step S604: the computing power traffic passes through a P node, the P node may be understood as an intermediate node, the P node does not perform semantic parsing of computing power service identifier, and only performs stateless computing power forwarding, that is, UnderLay forwarding;
Step S605: the computing power traffic arrives at a specified egress node, the egress node completes UnderLay routing termination, and performs semantic parsing of computing power service identifier on an OverLay protocol message header, and executes computing power service addressing; and
Step S606: the egress node searches for the second routing table entry, computes a routing to a specified computing power service identifier according to the computing power service identifier and the parameters thereof, the computing power traffic arrives at an instance of the computing power service, and executes a service function.

In particular, in a scenario in which the computing power service identifier corresponds to a plurality of computing power service instances, the egress node executes a local policy, selects a target computing power service instance to forward the traffic, and maintains the mapping relationship between the computing power service identifier and the computing power service instance in a mode including, but not limited to, the computing power traffic quintuple, so as to maintain the flow viscosity.

By using the above embodiments, the computing power resource is divided into the slow variable-granularity computing power resource and the fast variable-granularity computing power service, wherein the slow variable-granularity computing power resource is used for indicating the computing power resource of which the resource state change frequency is lower than the preset threshold value, and the fast variable-granularity computing power service is used for indicating the refined computing power resource of which the resource state change frequency is higher than the preset threshold value; and the slow variable-granularity computing power resource is notified to the network edge node or the data center gateway in the first mode, and the fast variable-granularity computing power service is notified to the network edge node in the domain where the network edge node or the data center gateway is located in the second mode, that is, the computing power resource is divided into the slow variable-granularity computing power resource and the fast variable-granularity computing power service according to the resource state change frequency, and the slow variable-granularity computing power resource and the fast variable-granularity computing power service are notified in preset modes. By using the above method, it is possible to solve the problem in the related art that the computing power resources of different types and different state change frequencies are all incorporated into routing table entries maintained by a network node, resulting in an exponential growth in the routing table entries, and thus causing a damage to the routing convergence efficiency. Therefore, notification is performed according to different computing power resources, and then the computing power resources are incorporated into routing table entries maintained by different network nodes.

By using the descriptions of the above embodiments, those skilled in the art may clearly understand that, the method according to the above embodiments may be implemented by using software plus a necessary universal hardware platform, and of course may also be implemented by hardware, but the former is a better embodiment in many cases. Based on this understanding, the technical solutions of the present disclosure essentially or the part contributing to the prior art may be embodied in the form of a software product, the computer software product is stored in a storage medium (such as an ROM/RAM, a magnetic disk and an optical disk), and includes several instructions for instructing a computer device (which may be a mobile phone, a computer, a server, or a network device and the like) to execute the method in various embodiments of the present disclosure.

In the present embodiment, an apparatus for notifying computing power resource is further provided, the apparatus is used for implementing the above embodiments and the preferred embodiments, which have been illustrated and thus will not be repeated herein. As used below, the term "module" may implement a combination of software and/or hardware of predetermined functions. Although the apparatus described in the following embodiments is preferably implemented in software, implementations of hardware, or a combination of software and hardware are also possible and conceivable.

Fig. 7 is a structural block diagram of an apparatus for notifying computing power resource according to an embodiment of the present disclosure, and as shown in Fig. 7, the apparatus includes:
a division module 62, configured to divide a computing power resource into a slow variable-granularity computing power resource and a fast variable-granularity computing power service, wherein the slow variable-granularity computing power resource is used for indicating a computing power resource of which the resource state change frequency is lower than a preset threshold value, and the fast variable-granularity computing power service is used for indicating a refined computing power resource of which the resource state change frequency is higher than the preset threshold value; and
a notification module 64, configured to notify, in a first mode, the slow variable-granularity computing power resource to a network edge node or a data center gateway, and notify, in a second mode, the fast variable-granularity computing power service to a network edge node in a domain where the network edge node or the data center gateway is located.

By using the above embodiments, the computing power resource is divided into the slow variable-granularity computing power resource and the fast variable-granularity computing power service, wherein the slow variable-granularity computing power resource is used for indicating the computing power resource of which the resource state change frequency is lower than the preset threshold value, and the fast variable-granularity computing power service is used for indicating the refined computing power resource of which the resource state change frequency is higher than the preset threshold value; and the slow variable-granularity computing power resource is notified to the network edge node or the data center gateway in the first mode, and the fast variable-granularity computing power service is notified to the network edge node in the domain where the network edge node or the data center gateway is located in the second mode, that is, the computing power resource is divided into the slow variable-granularity computing power resource and the fast variable-granularity computing power service according to the resource state change frequency, and the slow variable-granularity computing power resource and the fast variable-granularity computing power service are notified in preset modes. By using the above method, it is possible to solve the problem in the related art that the computing power resources of different types and different state change frequencies are all incorporated into routing table entries maintained by a network node, resulting in an exponential growth in the routing table entries, and thus causing a damage to the routing convergence efficiency. Therefore, notification is performed according to different computing power resources, and then the computing power resources are incorporated into routing table entries maintained by different network nodes.

In one exemplary embodiment, the notification module is further configured to notify the slow variable-granularity computing power resource to the network edge node or the data center gateway by using a border gateway protocol (BGP); and notify control plane interface information of the slow variable-granularity computing power resource to the network edge node or the data center gateway.

In other words, the slow variable-granularity computing power resource has the following two notification modes 1) a border gateway protocol (Border Gateway Protocol, BGP for short) extension mode, that is, the information of the slow variable-granularity computing power resource is notified to the network edge node or the data center gateway by using an extended BGP load; and 2) a centralized controller mode: the control plane interface information of the slow variable-granularity computing power resource is notified to the network edge node or the data center gateway, wherein the notification mode includes, but is not limited to, using a path computation element protocol (Path Computation Element Protocol, PCEP for short), a BGP-LS, and the like, which is not limited in the embodiments of the present disclosure.

In one exemplary embodiment, the notification module is further configured to notify, in a publishing-subscribing subscription mode, the fast variable-granularity computing power service to the network edge node in the domain where the network edge node or the data center gateway is located; and notify, by using an interior gateway protocol (IGP), the fast variable-granularity computing power service to the network edge node in the domain where the network edge node or the data center gateway is located.

It can be understood that, the fast variable-granularity computing power service has the following two notification modes: 1) notifying, in the publishing-subscribing subscription mode, the fast variable-granularity computing power service to the network edge node in the domain where the network edge node or the data center gateway is located; and 2) notifying the fast variable-granularity computing power service by using interior gateway protocol (Interior Gateway Protocol, IGP for short) extension, that is, notifying, by using an extended IGP load, the fast variable-granularity computing power service to the network edge node in the domain where the network edge node or the data center gateway is located.

In one exemplary embodiment, the apparatus further includes a creation module, wherein after the slow variable-granularity computing power resource is notified to the network edge node or the data center gateway in the first mode, and the fast variable-granularity computing power service is notified to the network edge node in the domain where the network edge node or the data center gateway is located in the second mode, the creation module is configured to create a first routing table entry according to the slow variable-granularity computing power resource, in order to the network edge node or the data center gateway maintains the first routing table entry; and create a second routing table entry according to the fast variable-granularity computing power service, in order to the network edge node in the domain where the network edge node or the data center gateway is located maintains the second routing table entry.

It can be understood that, different routing table entries are created according to the granularity of the computing power resources, and the corresponding routing table entries are maintained by different nodes, specifically, the first routing table entry is created according to the slow variable-granularity computing power resource, the first routing table entry is maintained by the network edge node or the data center gateway which receives the slow variable-granularity computing power resource, the second routing table entry is created according to the fast variable-granularity computing power service, and the second routing table entry is maintained by the network edge node which receives the fast variable-granularity computing power service and which is in the domain where the network edge node or the data center gateway is located. It should be noted that, the granularity of the slow variable-granularity computing power resource in the first routing table entry is coarser and the change frequency is lower, in order to the size of the first routing table entry maintained by the network edge node or the data center gateway is in direct proportion to the number of network edge nodes or data center gateways which are connected and linked with the first routing table entry, and accordingly, the scale of the first routing table entry is greatly compressed. The size of the second routing table entry is in direct proportion to the scale of a computing power service provided by the network edge node in the domain where the network edge node or the data center gateway is located, and only the fast variable-granularity computing power service of the network edge node in the domain where the local or limited belonging network edge node or data center gateway is located is maintained, in order to the scale of the corresponding second routing table entry is greatly compressed.

In one exemplary embodiment, the apparatus further includes a determination module, after the first routing table entry is created according to the slow variable-granularity computing power resource, in order to the network edge node or the data center gateway maintains the first routing table entry, the determination module is further configured to: when an ingress node receives computing power traffic, determine, according to the first routing table entry, a target node satisfying a computing power traffic resource of the computing power traffic, wherein the target node includes a target network edge node or a target data center node; encapsulate an IP address of the target node in a message header; and acquire a computing power service identifier corresponding to the computing power traffic, and encapsulate the computing power service identifier in the target node, wherein the computing power service identifier has a one-to-one mapping relationship with a computing power service instance.

In other words, two-level IP address encapsulation and the computing power service identifier is executed at the ingress node (e.g., a broadband remote access system (BRAS)), when the ingress node receives the computing power traffic, the ingress node determines the target network edge node or the target data center node according to the first routing table entry maintained by the network edge node or the data center gateway, uses the target network edge node or the target data center node as the target node, and encapsulates the IP address of the target node in the message header, wherein the target node satisfies the computing power traffic resource of the computing power traffic, determines the corresponding computing power service identifier according to the computing power traffic, and encapsulates the computing power service identifier.

Further, in order to keep the computing power traffic to be routed to the corresponding computing power service instance, an egress node maintains the mapping relationship between the computing power service identifier and the computing power service instance, and the method for maintaining the mapping relationship includes, but is not limited to, a quintuple solution.

Specifically, the apparatus further includes: an encapsulation module, configured to encapsulate a destination address of the target node in the message header; and use the target node as an egress node of the computing power traffic, so as to determine a source address of the target node, and encapsulate the source address in the message header.

The IP address of the target node may be encapsulated in the message header in the following modes: 1) encapsulating the target network edge node or the target data center node in a corresponding field of the message header as the destination address of the target node, wherein the application scenario includes, but is not limited to, network data planes, such as IPv4, IPv6, MPLS, and the like; 2) using the target network edge node or the target data center node as the egress node, so as to arrange a source path, and encapsulating the source path in the corresponding message header, wherein the application scene includes, but is not limited to, network data planes such as SR-MPLS, SRv6, and the like.

The computing power service identifier may be encapsulated in the following modes: 1) an SRv6 computing power service identifier programming extension solution, that is, in a locator (Locator) + function (Function) structure of SID (Segment IDentification), the computing power service identifier is encapsulated in the SID as a Function; and 2) the computing power service identifier is encapsulated in an OverLay layer above the IP address.

In one exemplary embodiment, the apparatus further includes: an indication module configured to: when an intermediate node receives the computing power traffic carrying the encapsulated IP address and the encapsulated computing power service identifier, instructing the intermediate node to not decapsulate the encapsulated computing power service identifier, and instruct the intermediate node to forward the computing power traffic carrying the encapsulated IP address and the encapsulated computing power service identifier.

It can be understood that, the intermediate node does not need to identify the computing power service identifier, that is, the intermediate node does not need to decapsulate the computing power service identifier, and only performs ordinary forwarding according to the computing power traffic carrying the encapsulated IP address and the encapsulated computing power service identifier.

In one exemplary embodiment, the apparatus further includes a decapsulation module configured to: when the egress node receives the computing power traffic carrying the encapsulated IP address and the encapsulated computing power service identifier, instruct the egress node to decapsulate the encapsulated computing power service identifier, so as to obtain the computing power service identifier; instruct the egress node to search for, from the second routing table entry, a target computing power service instance corresponding to the computing power service identifier; and forward the computing power traffic to the target computing power service instance.

In other words, after the computing power traffic arrives at the egress node, the egress node decapsulates the encapsulated computing power service identifier, the egress node searches for the second routing table entry, determines the target computing power service instance according to the computing power service identifier, and forwards the computing power traffic to the target computing power service instance, and particularly, when the computing power service identifier corresponds to a plurality of target computing power service instances, the egress node executes a local policy, and selects a specific target computing power service instance.

The embodiments of the present disclosure further provide a storage medium, wherein a computer program is stored in the storage medium, and the computer program is configured to execute the steps in any one of the foregoing method embodiments when running.

Optionally, in the present embodiment, the storage medium may be configured to store a computer program which is used for executing the following steps:
S12, dividing a computing power resource into a slow variable-granularity computing power resource and a fast variable-granularity computing power service, wherein the slow variable-granularity computing power resource is used for indicating a computing power resource of which the resource state change frequency is lower than a preset threshold value, and the fast variable-granularity computing power service is used for indicating a refined computing power resource of which the resource state change frequency is higher than the preset threshold value; and
S14, notifying, in a first mode, the slow variable-granularity computing power resource to a network edge node or a data center gateway, and notifying, in a second mode, the fast variable-granularity computing power service to a network edge node in a domain where the network edge node or the data center gateway is located.

Optionally, in the present embodiment, the storage medium may include, but is not limited to, a variety of media capable of storing the computer program, such as a USB flash disk, a read-only memory (Read-Only Memory, ROM for short), a random access memory (Random Access Memory, RAM for short), a mobile hard disk, a magnetic disk, or an optical disk, etc.

The embodiments of the present disclosure further provide an electronic apparatus, including a memory and a processor, wherein a computer program is stored in the memory, and the processor is configured to run the computer program, so as to execute the steps in any one of the foregoing method embodiments.

Optionally, the electronic apparatus may further include a transmission device and an input/output device, wherein the transmission device is connected with the processor, and the input/output device is connected with the processor.

Optionally, in the present embodiment, the processor may be configured to execute the following steps by using the computer program:
S22, dividing a computing power resource into a slow variable-granularity computing power resource and a fast variable-granularity computing power service, wherein the slow variable-granularity computing power resource is used for indicating a computing power resource of which the resource state change frequency is lower than a preset threshold value, and the fast variable-granularity computing power service is used for indicating a refined computing power resource of which the resource state change frequency is higher than the preset threshold value; and
S24, notifying, in a first mode, the slow variable-granularity computing power resource to a network edge node or a data center gateway, and notifying, in a second mode, the fast variable-granularity computing power service to a network edge node in a domain where the network edge node or the data center gateway is located.

Optionally, in the present embodiment, the storage medium may include, but is not limited to, a variety of media capable of storing the computer program, such as a USB flash disk, a read-only memory (Read-Only Memory, ROM for short), a random access memory (Random Access Memory, RAM for short), a mobile hard disk, a magnetic disk, or an optical disk, etc.

Optionally, the specific examples in the present embodiment may refer to the examples described in the foregoing embodiments and optional implementations, and thus details are not described in the present embodiment again.

Obviously, it should be understood by those skilled in the art that, various modules or steps of the present disclosure may be implemented by a universal computing apparatus, may be concentrated on a single computing apparatus, or distributed on a network composed of a plurality of computing apparatuses, optionally, the modules or steps may be implemented by executable program codes of the computing apparatus, therefore the modules or steps may be stored in a storage apparatus to be executed by the computing apparatus, and in some cases, the illustrated or described steps may be executed in a different sequence than here, or the steps are respectively made into various integrated circuit modules, or a plurality of modules or steps therein may be made into a single integrated circuit module. In this way, the present disclosure is not limited to any particular hardware and software combination.

The above descriptions are only preferred embodiments of the present disclosure, and are not intended to limit the present disclosure, and for those skilled in the art, the present disclosure may have various changes and modifications. Any modifications, equivalent replacements, improvements and the like, made within the principles of the present disclosure, shall fall within the protection scope of the present disclosure.

## Claims

1. A method for notifying a computing power resource, comprising:
dividing a computing power resource into a slow variable-granularity computing power resource and a fast variable-granularity computing power service, wherein the slow variable-granularity computing power resource is used for indicating a computing power resource of which the resource state change frequency is lower than a preset threshold value, and the fast variable-granularity computing power service is used for indicating a refined computing power resource of which the resource state change frequency is higher than the preset threshold value; and
notifying, in a first mode, the slow variable-granularity computing power resource to a network edge node or a data center gateway, and notifying, in a second mode, the fast variable-granularity computing power service to a network edge node in a domain where the network edge node or the data center gateway is located.

2. The method according to claim 1, wherein the step: notifying, in the first mode, the slow variable-granularity computing power resource to the network edge node or the data center gateway, at least comprises one of the following:
notifying the slow variable-granularity computing power resource to the network edge node or the data center gateway by using a border gateway protocol (BGP); and
notifying control plane interface information of the slow variable-granularity computing power resource to the network edge node or the data center gateway.

3. The method according to claim 1, wherein the step: notifying, in the second mode, the fast variable-granularity computing power service to the network edge node in the domain where the network edge node or the data center gateway is located, at least comprises at least one of the following:
notifying, in a publishing-subscribing subscription mode, the fast variable-granularity computing power service to the network edge node in the domain where the network edge node or the data center gateway is located; and
notifying, by using an interior gateway protocol (IGP), the fast variable-granularity computing power service to the network edge node in the domain where the network edge node or the data center gateway is located.

4. The method according to claim 1, wherein after notifying, in the first mode, the slow variable-granularity computing power resource to the network edge node or the data center gateway, and notifying, in the second mode, the fast variable-granularity computing power service to the network edge node in the domain where the network edge node or the data center gateway is located, the method further comprises:
creating a first routing table entry according to the slow variable-granularity computing power resource, in order to the network edge node or the data center gateway maintains the first routing table entry; and
creating a second routing table entry according to the fast variable-granularity computing power service, in order to the network edge node in the domain where the network edge node or the data center gateway is located maintains the second routing table entry.

5. The method according to claim 4, wherein after creating the first routing table entry according to the slow variable-granularity computing power resource, in order to the network edge node or the data center gateway maintains the first routing table entry, the method further comprises:
in the case that an ingress node receives computing power traffic, determining, according to the first routing table entry, a target node satisfying a computing power traffic resource of the computing power traffic, wherein the target node comprises a target network edge node or a target data center node;
encapsulating an IP address of the target node in a message header; and
acquiring a computing power service identifier corresponding to the computing power traffic, and encapsulating the computing power service identifier in the target node, wherein the computing power service identifier has a one-to-one mapping relationship with a computing power service instance.

6. The method according to claim 5, wherein the encapsulating the IP address of the target node in the message header at least comprises one of the following:
encapsulating a destination address of the target node in the message header; and
using the target node as an egress node of the computing power traffic, to determine a source address of the target node, and encapsulating the source address in the message header.

7. The method according to claim 5, wherein the method further comprises:
when an intermediate node receives the computing power traffic carrying the encapsulated IP address and the encapsulated computing power service identifier, instructing the intermediate node to not decapsulate the encapsulated computing power service identifier, and instructing the intermediate node to forward the computing power traffic carrying the encapsulated IP address and the encapsulated computing power service identifier.

8. The method according to claim 5, wherein the method further comprises:
when the egress node receives the computing power traffic carrying the encapsulated IP address and the encapsulated computing power service identifier, instructing the egress node to decapsulate the encapsulated computing power service identifier, to obtain the computing power service identifier;
instructing the egress node to search for, from the second routing table entry, a target computing power service instance corresponding to the computing power service identifier; and
forwarding the computing power traffic to the target computing power service instance.

9. An apparatus for notifying a computing power resource, comprising:
a division module, configured to divide a computing power resource into a slow variable-granularity computing power resource and a fast variable-granularity computing power service, wherein the slow variable-granularity computing power resource is used for indicating a computing power resource of which the resource state change frequency is lower than a preset threshold value, and the fast variable-granularity computing power service is used for indicating a refined computing power resource of which the resource state change frequency is higher than the preset threshold value; and
a notification module, configured to notify, in a first mode, the slow variable-granularity computing power resource to a network edge node or a data center gateway, and notify, in a second mode, the fast variable-granularity computing power service to a network edge node in a domain where the network edge node or the data center gateway is located.

10. A computer-readable storage medium, wherein a computer program is stored in the storage medium, and the computer program is configured to execute the method according to any one of claims 1-8 when running.

11. An electronic apparatus, comprising a memory and a processor, wherein a computer program is stored in the memory, and the processor is configured to execute the method according to any one of claims 1-8 by using the computer program.
